# EUROPÄISCHE PATENTSCHRIFT

(11) **EP 4 244 082 B1**
(45) Veröffentlichungstag und Bekanntmachung des Hinweises auf die Patenterteilung: **08.01.2025**
(21) Anmeldenummer: 21811253.0
(22) Anmeldetag: 08.11.2021
(51) Int. Cl.: B60C 11/12, B60C 11/13

(54) **FAHRZEUGLUFTREIFEN**
PNEUMATIC VEHICLE TIRE
PNEUMATIQUE DE VÉHICULE

(30) Priorität: 11.11.2020 DE 102020214164
(43) Veröffentlichungstag der Anmeldung: 20.09.2023
(73) Patentinhaber: Continental Reifen Deutschland GmbH, 30175 Hannover (DE)
(72) Erfinder: BAUER, Claudia, 30165 Hannover (DE); VELLINGA-WALLENHAUER, Marieken, 30165 Hannover (DE); PANG-JIAN-XIANG, Edwin, 30165 Hannover (DE); KÖTTER, Maik, 30165 Hannover (DE)
(74) Vertreter: Continental Corporation
(86) Internationale Anmeldenummer: PCT/DE2021/200179
(87) Internationale Veröffentlichungsnummer: WO 2022/100799

(56) Entgegenhaltungen:
- EP-A1- 3 415 343
- EP-A2- 1 048 488
- WO-A1-2015/200249
- WO-A1-2016/156705
- WO-A1-2019/108173
- DE-A1- 102017 211 128
- JP-A- 2006 151 233

## Beschreibung

Die Erfindung betrifft einen Fahrzeugluftreifen mit einem Laufstreifen mit zu Schulterblockreihen gehörenden schulterseitigen Blöcken und mit mittleren Blöcken zwischen den schulterseitigen Blockreihen, wobei zumindest die Blöcke der Schulterblockreihen durch Querrillen, welche einen Winkel in einem Bereich von 0° bis 35° mit der axialen Richtung einschließen, voneinander beabstandet sind und wobei die schulterseitigen Blöcke und die mittleren Blöcke jeweils mit in Draufsicht zumindest zwei im Wesentlichen parallel zueinander sowie sich unter einem Winkel von bis zu 45° zur axialen Richtung erstreckenden Einschnitten versehen sind, welche eine Breite von 0,4 mm bis 0,8 mm und an ihrer tiefsten Stelle eine Tiefe von mindestens 50% der Profiltiefe aufweisen, wobei die Blöcke zusätzlich Mikrorillen aufweisen, welche im Wesentlichen parallel zu den Einschnitten und/oder quer zu den Einschnitten angeordnet sind und wobei die Mikrorillen mit einer Breite von 0,2 mm bis 0,7 mm und mit einer Tiefe von 0,2 mm bis 0,7 mm versehen sind, wobei in zumindest einem zur Schulterblockreihe gehörigen Block vorzugsweise in allen zur Schulterblockreihe gehörigen Blöcken, zumindest eine Mikrorille angeordnet ist, welche in ihrer Erstreckung einen Winkel α von 0° bis 15°, bevorzugt einen Winkel α von 0° bis 8° mit der Umfangsrichtung einschließt.

Es ist bekannt, bei für den Wintereinsatz vorgesehenen Fahrzeugluftreifen die Blöcke des Laufstreifens gleichmäßig mit einer Vielzahl von parallel zueinander verlaufenden, sehr seichten Mikrorillen zu "überziehen". Im Gegensatz zu herkömmlichen in den Blöcken ausgebildeten Einschnitten schließen sich derartige Mikrorillen infolge ihrer geringen Tiefe nicht unter den beim Abrollen auftretenden Kräften. Die Mikrorillen verlaufen in Draufsicht üblicherweise in axialer Richtung oder unter einem von der axialen Richtung um bis zu 90° abweichenden Winkel. Die durch die Mikrorillen gebildete Oberflächenstruktur trägt bei neuen Reifen, insbesondere bei sogenannten "Softcompound"-Winterreifen, dazu bei, den sich beim Bremsen und beim Beschleunigen auf schnee- und/oder eisbedeckten Fahrbahnen bildenden Wasserfilm von der Oberfläche der Blöcke aufzunehmen, abzuleiten und den Laufstreifen derart zu entwässern. Die Höhe des sich auf der Fahrbahn bildenden Wasserfilms hängt unter anderem von der Umgebungstemperatur und der Intensität der Sonneneinstrahlung ab. Bei einer Umgebungstemperatur knapp unter 0°C und langer, intensiver Sonneneinstrahlung schmilzt beispielsweise besonders viel Eis und/oder Schnee, sodass sich ein hoher Wasserfilm bildet. Zum Fahren auf einer solchen Fahrbahn ist es vorteilhaft, wenn eine Aufnahme und Ableitung des Wasserfilms über Mikrorillen gewährleistet ist und gleichzeitig die Kontaktfläche der Profilblöcke bei neuen Reifen ausreichend groß ist, um eine gute Kraftübertragung vom Reifen auf den Untergrund sicherzustellen. Ein derartiger Fahrzeugluftreifen, welcher auch ein Fahrzeugluftreifen der eingangs genannten Art ist, ist beispielsweise aus der DE10 2017 211 128 A1 bekannt.

Ein weiterer Fahrzeugluftreifen der eingangs genannten Art ist aus der JP 2006 151233 A bekannt. Der aus der WO 2015/200249 A1 bekannte Fahrzeugluftreifen weist einen Laufstreifen mit mehreren Profilblockreihen auf, deren Profilblöcke jeweils eine Vielzahl von im Bereich der sich lateral erstreckenden Blockkanten der Profilblöcke kurze, sich in Umfangsrichtung erstreckende Mikrorillen aufweist.

Die WO 2016/156705 A1 offenbart einen Fahrzeugluftreifen mit einem Laufstreifen mit schulterseitigen Profilrippen, die durch Querrillen und parallel zu diesen verlaufenden Einschnitten in Profilblöcke gegliedert sind, wobei die Einschnitte an ihren außerhalb der Bodenaufstandsfläche des Reifens befindlichen Enden trichterartige Erweiterungen aufweisen. Bei dem aus der WO 2019/108 173 A1 bekannten Fahrzeugluftreifen weist der Laufstreifen schulterseitige Profilblöcke auf, welche in Umfangsrichtung durch Querrillen voneinander getrennt sind, die im Bereich Ihrer Einmündungen zu Umfangsrillen mit Erweiterungen versehen sind. Bei dem aus der EP 3 415 343 A1 bekannten Fahrzeugreifen sind im Laufstreifen mit Einschnitten versehene Profilpositive ausgebildet, wobei die Einschnitte am Einschnittgrund als Kanal ausgebildet sind, welcher jeweils mit seinen beiden Enden in die das Profilpositiv begrenzenden Rillen mündet und hier als Trichter erweitert ist. Eine ähnliche Ausführung, nämlich Einschnitte in schulterseitigen Profilblöcken, die jeweils mit einer trichterartigen Erweiterung im Bereich des Einschnittgrundes versehen sind, ist bei dem Laufstreifen des aus der EP 1 048 488 A2 bekannten Fahrzeugluftreifens vorgesehen.

Der Ausdruck "Mikrorillen, welche im Wesentlichen parallel zu den Einschnitten angeordnet sind" meint bei Einschnitten, welche von der Ausbildung als Gerade abweichen, dass die Mikrorillen zu den Mittellinien dieser Einschnitte im Wesentlichen parallel verlaufen. Einschnitte, welche von der Ausbildung als Gerade abweichen, sind beispielsweise wellen- oder zick-zack-förmig verlaufende Einschnitte.

Die Mikrorillen können auch von der Ausbildung als Gerade abweichen und beispielsweise wellen- oder zick-zack-förmig verlaufen und auch eine unterschiedliche Gestaltung als die Einschnitte aufweisen, wobei die Mittellinien der Mikrorillen dann weiter im Wesentlichen parallel zu den Mittellinien der Einschnitte sind.

Generell werden durch die Anordnung von Mikrorillen die Nassbremseigenschaften leicht schlechter. Dieses ist durch leichte Turbulenzen an der Fahrbahnoberfläche bedingt, welche auch "Mikroaquaplaning" genannt werden.

Der Erfindung liegt daher die Aufgabe zugrunde, einen Reifen der eingangs genannten Art am Laufstreifen derart zu gestalten, dass eine Ableitung des oben erwähnten Wasserfilms über Mikrorillen weiterhin gewährleistet ist und dass weiterhin eine gute Kraftübertragung vom Reifen auf den Untergrund sichergestellt ist. Zusätzlich sollen das Nassbremsen und gleichzeitig die Schnee- und Eiseigenschaften verbessert werden.

Die gestellte Aufgabe wird erfindungsgemäß dadurch gelöst, dass an beiden Enden dieser Mikrorille im Bereich der Einlauf- und Auslaufkante je eine trichterartige Erweiterung ausgebildet ist, welche jeweils in die diesen Block begrenzenden Querrillen mündet.

Diese Mikrorille(n), welche etwa umfangsorientiert sind, weisen Verbreiterungen in Form von trichterartigen Erweiterungen an ihren beiden Enden auf. Diese Verbreiterungen sind trichterartig ausgeführt, so dass die Verbreiterung sowohl in Bezug auf die Breite als auch in Bezug auf die Tiefe der Rille verwirklicht ist. Die Tiefe nimmt dabei rampenartig in Richtung Querrille zu. Wesentlich ist, dass die trichterartigen Erweiterungen an beiden Enden der Mikrorille angeordnet sind, im Bereich der Einlauf- und Auslaufkante des Profilblockes liegen und in die den Block begrenzenden Querrillen münden.

Hierdurch ist eine höhere Wasseraufnahme und Wasserableitung zur Querrille zur Verringerung der Turbulenzen beim Nassbremsen und auf eisiger Fahrbahn ermöglicht, wodurch die Nassbremseigenschaften verbessert sind. Zudem ist die Auslauf- und Einlaufkante des Profilblockes durch die trichterartigen Ausnehmungen unterbrochen, wodurch der Druck der verbleibenden Blockkanten höher ist und diese Kanten damit tiefer in den Schnee eindringen können. In der trichterartigen Ausnehmung kann weiterhin Schnee aufgenommen werden, was die Schnee-Schnee-Haftung erhöht. Die Schnee- und Eiseigenschaften sind verbessert.

Zweckmäßig ist es, wenn in zumindest einem zur Schulterblockreihe gehörenden Block ein bis vier, bevorzugt ein bis zwei Mikrorillen angeordnet sind, welche in ihrer Erstreckung (= Längserstreckung) einen gleichen Winkel α von 0° bis 15°, bevorzugt einen Winkel α von 0° bis 8° mit der Umfangsrichtung einschließen und wenn an beiden Enden dieser Mikrorillen je eine trichterartige Erweiterung ausgebildet ist. Hierdurch sind die Nassbremseigenschaften und die Schnee- und Eiseigenschaften besonders gut verbessert und weiterhin eine gute Kraftübertragung auf dem Untergrund sichergestellt.

Vorteilhaft ist es, wenn die Mikrorillen außerhalb der trichterartigen Erweiterungen mit einer Breite von 0,5 mm und mit einer Tiefe von 0,5 mm versehen sind. Hierdurch ist es ermöglicht, den seichten Wasserfilm auf Eis mit den Mikrorillen optimal aufzunehmen und an deren Enden die trichterartigen Ausnehmungen anzubinden, ohne die Steifigkeit und ohne die Kontaktfläche des Profilblockes erheblich zu verringern.

Zweckmäßig ist es, wenn die trichterartige Erweiterung rampenförmig zum Ende der Mikrorille an Tiefe zunimmt und an der tiefsten Stelle, welche am äußersten Ende der Mikrorille (also nahe der Querrille) liegt, 1,0 mm bis 3,0 mm, bevorzugt 1,5 mm tief ist. Somit ist die trichterartige Erweiterung beispielsweise bei einer bevorzugten Tiefe von 1,5 mm an ihrer tiefsten Stelle um 1,0 mm tiefer als die Mikrorille in ihrer bevorzugten Tiefe von 0,5 mm. Es wird sichergestellt, dass das Wasser zur Querrille aufgenommen und abgeleitet wird und dass ausreichend Volumen zur Aufnahme von Schnee für die Schnee-Schnee-Reibung angeboten wird, ohne die Steifigkeit nachteilig zu verringern.

Der Begriff "Mikrorille" umfasst sowohl die Rille selbst als auch die trichterartigen Erweiterungen, welche im Bereich der beiden Enden der Mikrorille angeordnet sind.

Zweckmäßig ist es, wenn die trichterartige Erweiterung eine maximale Breite in einem Bereich von 1,0 mm bis 3,0 mm, bevorzugt von 2,0 mm aufweist, wobei diese maximale Breite an der Oberfläche des Profilblockes am äußeren Ende der trichterartigen Erweiterung ausgebildet ist und dass die trichterartige Erweiterung eine geringere Breite an ihrem Grund/Boden in einem Bereich von 0,2 mm bis 1,5 mm, bevorzugt von 0,4 mm bis 1,0 mm aufweist. Die Breite an der Oberfläche des Profilblockes ist immer größer als die Breite am Grund/Boden der trichterartigen Erweiterung.

Die höhere Breite an der Oberfläche verbessert die Aufnahme des Wassers und des Schnees sowie die Wasserableitung, während die geringere Breite in der Tiefe bewirkt, dass die Steifigkeit nur geringfügig kleiner wird und die Schnee-Schneereibung erhöht wird.

In einer Ausführung der Erfindung verjüngt sich die Breite des Grundes/Bodens vom Beginn der trichterartigen Erweiterung zur Querrille hin. Durch die am Grund reduzierte Breite wird die Steifigkeit des Profilblocks nur geringfügig kleiner und die Schnee-Schneereibung ist vorteilhaft erhöht.

Zweckmäßig ist es, wenn die trichterartige Erweiterung zwei Flanken aufweist, welche zum Grund der trichterartigen Erweiterung führen, wobei die Flanken jeweils einen Winkel β in einem Bereich von 10° bis 50°, bevorzugt in einem Bereich von 15° bis 30°, besonders bevorzugt von etwa 20° mit der radialen Richtung einschließen. Hierdurch wird die Steifigkeit nur geringfügig kleiner und die Schnee-Schnee-Haftung vorteilhaft erhöht.

Vorteilhaft ist es, wenn die trichterartige Erweiterung einen etwa dreieckförmigen oder etwa halbkreisförmigen oder etwa trapezförmigen Querschnitt aufweist, wobei die größte Breite der Erweiterung an der Oberfläche des Blockes und die geringste Breite an dem Grund/Boden der Erweiterung ausgebildet ist. Hierdurch wird die Breite von der Mikrorille nach außen zur Querrille hin verbreitert, wodurch die Wasserableitung optimiert ist und der Druck an den Blockkanten für besseres Eindringen in den Schnee erhöht ist.

Trichterartigen Erweiterungen mit einem etwa dreickförmigen Querschnitt, wobei der Grund der trichterartigen Erweiterung verrundet ist, weisen vorzugsweise Flanken auf, welche jeweils einen Winkel β in einem Bereich von 10° bis 50°, bevorzugt in einem Bereich von 15° bis 30°, besonders bevorzugt von etwa 20° mit der radialen Richtung einschließen.

Trichterartigen Erweiterungen mit einem etwa trapezförmigen Querschnitt, wobei der Grund der trichterartigen Erweiterung eine Gerade ist, weisen vorzugsweise Flanken auf, welche jeweils einen Winkel β in einem Bereich von 10° bis 50°, bevorzugt in einem Bereich von 15° bis 30°, besonders bevorzugt von etwa 20° mit der radialen Richtung einschließen.

Zweckmäßig ist es, wenn jeder der zu den Schulterblockreihen gehörenden schulterseitigen Blöcken 2 Mikrorillen aufweist, welche in ihrer Erstreckung einen Winkel α von 0° bis 15°, bevorzugt einen Winkel α von 0° bis 8° mit der Umfangsrichtung einschließen und wenn an beiden Enden dieser Mikrorillen je eine trichterartige Erweiterung ausgebildet ist, welche jeweils in die diesen Block begrenzenden Querrillen mündet. Hierdurch ist der beste Kompromiss erhalten zwischen Wasseraufnahme (ausreichendes Volumen) und Wasserableitung, um den seichten Wasserfilm aufzunehmen und abzuleiten und auf der anderen Seite die Kontaktfläche und Steifigkeit des Profilblockes nur geringfügig zu verringern.

Es ist weiterhin vorteilhaft, wenn die an eine Schulterblockreihe anschließende Blockreihe, bei welcher die Blöcke ebenfalls durch Querrillen, welche einen Winkel in einem Bereich von 0° bis 35° zur axialen Richtung einschließen, voneinander getrennt sind, pro Block jeweils ein oder zwei Mikrorillen angeordnet sind, welche in ihrer Erstreckung einen Winkel α von 0° bis 15°, bevorzugt einen Winkel α von 0° bis 8° mit der Umfangsrichtung einschließen und wenn an beiden Enden dieser Mikrorille(n) je eine trichterartige Erweiterung ausgebildet ist, welche jeweils in den diesen Block begrenzenden Querrillen mündet. Hierdurch sind die vorher beschriebenen Eigenschaften nicht nur an den Schulterblöcken, sondern auch an denjenigen Blöcken wirksam, welche in einer Blockreihe angeordnet sind, welche nach axial innen an eine Schulterblockreihe anschließt.

In einer bestimmten Ausführung der Erfindung sind an der Einlauf- und Auslaufkante zumindest eines Profilblockes Schneekanten angeordnet, wobei eine Schneekante ein erhabener Steg ist, welcher 0,2 mm - 1,0 mm, bevorzugt 0,3 mm - 0,5 mm über die Oberfläche des Blockes hinaussteht und eine Breite von 0,1 mm - 1,0 mm, bevorzugt 0,3 mm - 0,5 mm aufweist. Im Bereich der trichterartigen Erweiterung ist der Steg selbstverständlich unterbrochen ausgeführt. Bestimmte Ausführungen von den erhabenen Stegen, welche auch als "Schneekanten" bekannt sind, sind beispielsweise in der DE 10 2017 2215 82 A1 offenbart. Durch das Eindringen der erhabenen Stege in den Schnee werden die Schneeeigenschaften des Fahrzeugluftreifens verbessert. Die Wasseraufnahme und Wasserableitung ist durch die Mikrorillen mit der trichterartigen Erweiterung zur Querrille hin trotz der Schneekanten, welche im Bereich der trichterartigen Erweiterung durchbrochen sind, sichergestellt. Zudem ist die Schneeaufnahme zur verbesserten Schnee-Schnee-Haftung erhalten.

Weitere Merkmale, Vorteile und Einzelheiten der Erfindung werden nun anhand der Zeichnungen, die schematisch ein Ausführungsbeispiel der Erfindung darstellen, näher beschrieben. Dabei zeigen die
Fig. 1 eine Draufsicht auf eine Teilabwicklung eines Laufstreifens eines Fahrzeugluftreifens mit einer Ausführungsvariante der Erfindung;
Fig. 2 eine vergrößerte Draufsicht auf einen Profilblock der rechten Schulterblockreihe des Laufstreifens aus Fig. 1;
Fig. 3 eine vergrößerte Draufsicht auf je zwei Profilblöcke der linken Schulterblockreihe und der Profilblockreihe halbe Mitte außen des Laufstreifens aus Fig. 1;
Fig. 4 eine Detailaufsicht A auf die trichterartige Erweiterung der Fig. 2;
Fig. 5 einen Querschnitt A-A durch die trichterartige Erweiterung von Fig. 2 und Fig. 4;
Fig. 6 eine Detailaufsicht B auf die trichterartige Erweiterung der Fig. 3;
Fig. 7 einen Querschnitt B-B durch die trichterartige Erweiterung von Fig. 3 und 6.

Erfindungsgemäß ausgeführte Fahrzeugluftreifen sind insbesondere Winterreifen in Radialbauart für Personenkraftwagen, Vans oder Light-Trucks.

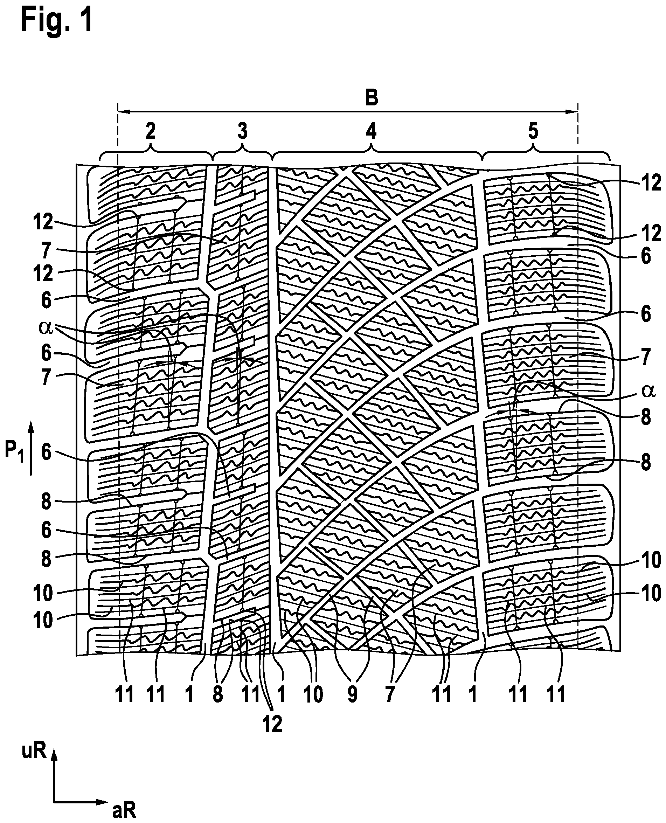

Der in Fig. 1 gezeigte Laufstreifen weist drei etwa in Umfangrichtung verlaufende Hauptrillen 1 auf, welche das Profil in vier in Umfangsrichtung umlaufende Profilbereiche gliedert, welche von links nach rechts aufgezählt sind: linke Schulterblockreihe 2, Profilblockreihe halbe Mitte außen 3, mittlere Blockreiche 4, rechte Schulterblockreihe 5. Die linke Schulterblockreihe 2, die Profilblockreihe halbe Mitte außen 3 und die rechte Schulterblockreihe 5 weisen durch Querrillen 6 voneinander trennende Profilblöcke 7 auf, durch welche an jedem Profilblock Einlauf- und Auslaufkanten 8 gebildet sind. Die Querrillen 6 sind derart orientiert, dass sie in den beiden Schulterblockreihen einen Winkel in einem Bereich von 0 bis 20° und in der Blockreihe Halbmitte außen einen Winkel in einem Bereich von 10° bis 35°, bevorzugt in einem Bereich von 20° bis 25° mit der axialen Richtung aR einschließen. Die mittlere Blockreihe 4 ist durch sich kreuzende Schrägrillen 9 in einzelne Profilblöcke 7 geteilt. Die Abrollrichtung des Reifens bei Vorwärtsfahrt ist durch den Pfeil P₁ angedeutet. Die Breite B der Bodenaufstandsfläche entspricht der Breite des statisch ermittelten Footprints bei einer Last von 70 % der maximalen Tragfähigkeit bei einem Innendruck von 85 %, ermittelt gemäß E.T.R.T.O.-Standards.

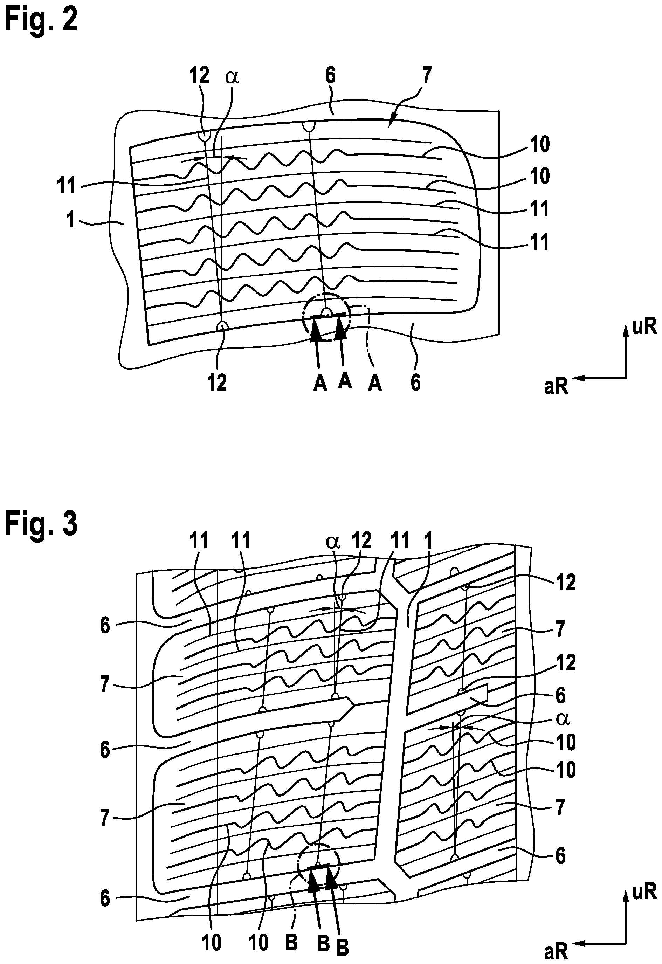

Sämtliche Profilblöcke 7 sind jeweils in Draufsicht mit zumindest drei im Wesentlichen parallel zueinander sowie sich unter einem Winkel von bis zu 45° zur axialen Richtung aR erstreckenden Einschnitten 10 versehen, welche eine Breite von 0,4 mm bis 0,8 mm und an ihrer tiefsten Stelle eine Tiefe von mindestens 50% der Profiltiefe aufweisen. Die Blöcke 7 weisen zusätzlich Mikrorillen 11 auf, welche im Wesentlichen parallel zu den Einschnitten 10 und/oder quer zu den Einschnitten 10 angeordnet sind. Die Mikrorillen 11 sind mit einer Breite von 0,2 mm bis 0,7 mm, vorzugsweise von 0,5 mm und mit einer Tiefe von 0,2 mm bis 0,7 mm, vorzugsweise von 0,5 mm versehen. Wie in Fig. 2 und Fig. 3 in vergrößerter Draufsicht gezeigt, ist in jedem zur linken und rechten Schulterblockreihe 2, 5 sowie in jedem der Profilblockreihe halbe Mitte außen 3 gehörigen Blöcken 7 zumindest eine Mikrorille 11 angeordnet, welche in ihrer Erstreckung einen Winkel α von 0° bis 15°, bevorzugt einen Winkel α von 0° bis 8° mit der Umfangsrichtung uR einschließt. An beiden Endbereichen dieser Mikrorillen 11 ist je eine trichterartige Erweiterung 12 ausgebildet, welche jeweils in die diesen Block begrenzenden Querrillen 6 mündet. Das Ende dieser Mikrorille befindet sich definitionsgemäß an der Einlauf-bzw. Auslaufkante des Profilblockes.

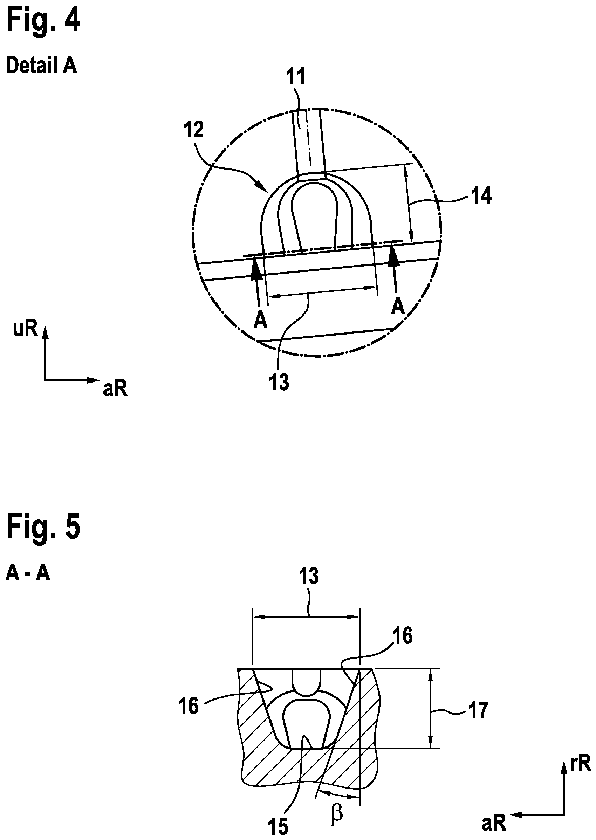

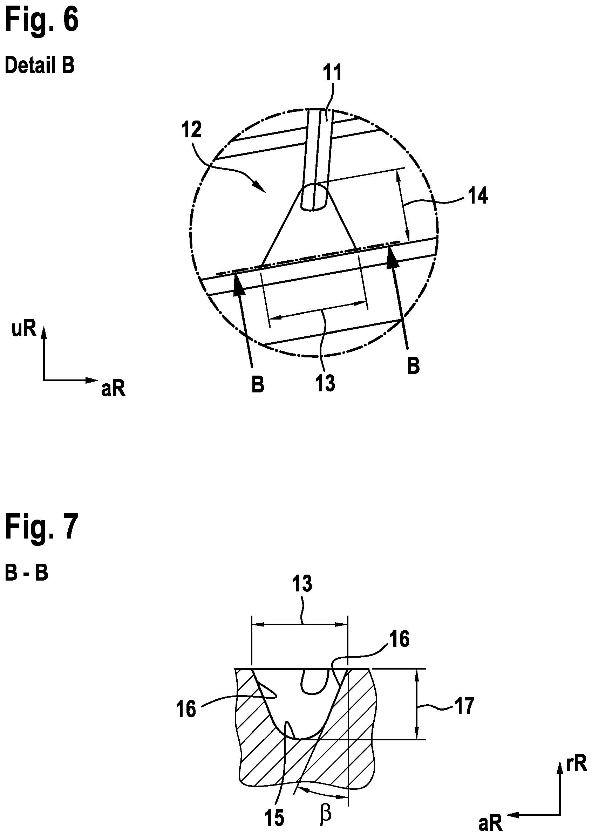

Die trichterartige Erweiterung 12 nimmt an Tiefe rampenförmig zum Ende der Mikrorille 11 hin zu und ist an der tiefsten Stelle 17, welche am äußersten Ende der Mikrorille liegt, 1,0 mm bis 3 mm, bevorzugt 1,5 mm tief ist. Somit ist die trichterartige Erweiterung beispielsweise bei einer bevorzugten Tiefe von 1,5 mm an ihrer tiefsten Stelle um 1,0 mm tiefer als die Mikrorille in ihrer bevorzugten Tiefe von 0,5 mm, siehe Fig. 5 und Fig. 7.

Die trichterartige Erweiterung 12 der rechten Schulterblockreihe 5 weist in der Detailaufsicht A der Fig. 4 eine maximale Breite 13 in einem Bereich von 2 mm auf, wobei diese maximale Breite 13 an der Oberfläche des Profilblockes 7 am äußeren Ende der trichterartigen Erweiterung 12 ausgebildet ist. Die Fig. 5 zeigt einen Schnitt A-A durch diese in der Fig. 4 in Draufsicht dargestellte trichterartigen Erweiterung 12. Am Grund/Boden 15 weist die trichterartige Erweiterung 12 eine geringere Breite in einem Bereich von 0,2 mm bis 1,5 mm, bevorzugt von 0,4 mm bis 1,0 mm auf und ist aus einer Geraden gebildet. Die Breite am Grund des Bodens der trichterartigen Erweiterung 12 nimmt zum äußeren Ende hin ab. Die Länge 14 jeder trichterartigen Erweiterung liegt in einem Bereich von 1,0 mm bis 2,5 mm und beträgt bevorzugt 1,5 mm.

Die trichterartige Erweiterung 12 weist zwei Flanken 16 auf, welche zum Grund 15 der trichterartigen Erweiterung 12 führen, wobei die Flanken 16 jeweils einen Winkel β in einem Bereich von 10° bis 50°, bevorzugt von etwa 20° mit der radialen Richtung rR einschließen.

Die trichterartige Erweiterung 12 der linken Schulterblockreihe und der Profilblockreihe halbe Mitte außen, wie in Fig. 6 und 7 dargestellt, unterscheidet sich darin von der trichterartigen Erweiterung der Figuren 4 und 5, dass der Grund/ Boden 15 nicht durch eine Gerade, sondern durch einen Radius gebildet ist. Die zwei Flanken 16, welche zum Grund 15 der trichterartigen Erweiterung 12 führen, schließen ebenfalls jeweils einen Winkel β in einem Bereich von 10° bis 50°, bevorzugt von etwa 20° mit der radialen Richtung rR ein.

### Bezugsziffernliste

- 1: Hauptrille
- 2: linke Schulterblockreihe
- 3: Profilblockreihe halbe Mitte außen
- 4: mittlere Profilblockreihe
- 5: rechte Schulterblockreihe
- 6: Querrille
- 7: (Profil-)Block
- 8: Einlauf- und Auslaufkante
- 9: Schrägrille
- 10: Einschnitt
- 11: Mikrorille
- 12: trichterartige Erweiterung
- 13: maximale Breite an der Blockoberfläche der trichterartigen Erweiterung
- 14: Länge der trichterartigen Erweiterung
- 15: Grund/ Boden der trichterartigen Erweiterung
- 16: Flanke der trichterartigen Erweiterung
- 17: Tiefe der trichterartigen Erweiterung
- P₁: Pfeil
- uR: Umfangsrichtung
- aR: axiale Richtung
- rR: radiale Richtung

## Patentansprüche

1. Fahrzeugluftreifen mit einem Laufstreifen mit zu Schulterblockreihen (2, 5) gehörenden schulterseitigen Blöcken (7) und mit mittleren Blöcken (7) zwischen den schulterseitigen Blockreihen (2, 5), wobei zumindest die Blöcke (7) der Schulterblockreihen (2, 5) durch Querrillen (6), welche einen Winkel in einem Bereich von 0° bis 35° mit der axialen Richtung einschließen, voneinander beabstandet sind, und wobei die schulterseitigen Blöcke (7) und die mittleren Blöcke (7) jeweils mit in Draufsicht zumindest zwei im Wesentlichen parallel zueinander sowie sich unter einem Winkel von bis zu 45° zur axialen Richtung erstreckenden Einschnitten (10) versehen sind, welche eine Breite von 0,4 mm bis 0,8 mm und an ihrer tiefsten Stelle eine Tiefe von mindestens 50% der Profiltiefe aufweisen, wobei die Blöcke (7) zusätzlich Mikrorillen (11) aufweisen, welche im Wesentlichen parallel zu den Einschnitten (10) und/oder quer zu den Einschnitten (10) angeordnet sind und wobei die Mikrorillen (11) mit einer Breite von 0,2 mm bis 0,7 mm und mit einer Tiefe von 0,2 mm bis 0,7 mm versehen sind, wobei in zumindest einem zur Schulterblockreihe (2, 5) gehörigen Block (7), vorzugsweise in allen zur Schulterblockreihe (2, 5) gehörigen Blöcken (7), zumindest eine Mikrorille (11) angeordnet ist, welche in ihrer Erstreckung einen Winkel α von 0° bis 15°, bevorzugt einen Winkel α von 0° bis 8° mit der Umfangsrichtung (uR) einschließt,
**dadurch gekennzeichnet,**
**dass** an beiden Enden dieser Mikrorille (11) im Bereich der Einlauf- und Auslaufkante (8) je eine trichterartige Erweiterung (12) ausgebildet ist, welche jeweils in die diesen Block (7) begrenzenden Querrillen (6) mündet.

2. Fahrzeugluftreifen nach Anspruch 1, **dadurch gekennzeichnet, dass** in dem zumindest einen zur Schulterblockreihe (2, 5) gehörenden Block (7) 1 bis 4, bevorzugt 1 bis 2 Mikrorillen (11) angeordnet sind, welche in ihrer Erstreckung einen gleichen Winkel α von 0° bis 15°, bevorzugt einen Winkel α von 0° bis 8° mit der Umfangsrichtung (uR) einschließen und dass an beiden Enden dieser Mikrorillen je eine trichterartige Erweiterung (12) ausgebildet ist.

3. Fahrzeugluftreifen nach Anspruch 1 oder 2, **dadurch gekennzeichnet, dass** die Mikrorillen (11) außerhalb der trichterartigen Erweiterungen (12) mit einer Breite von 0,5 mm und mit einer Tiefe von 0,5 mm versehen sind.

4. Fahrzeugluftreifen nach einem oder mehreren der Ansprüche 1 bis 3, **dadurch gekennzeichnet, dass** die trichterartige Erweiterung (12) rampenförmig zum Ende der Mikrorille an Tiefe zunimmt und an der tiefsten Stelle (17), welche am äußersten Ende der Mikrorille (11) liegt, 1,0 mm bis 3,0 mm, bevorzugt 1,5 mm ist.

5. Fahrzeugluftreifen nach einem oder mehreren der Ansprüche 1 bis 4, **dadurch gekennzeichnet, dass** die trichterartige Erweiterung (12) eine maximale Breite (13) in einem Bereich von 1,0 mm bis 3,0 mm, bevorzugt von 2,0 mm aufweist, wobei diese maximale Breite (13) an der Oberfläche des Profilblockes (7) am äußeren Ende der trichterartigen Erweiterung (12) ausgebildet ist und dass die trichterartige Erweiterung (12) eine geringere Breite an ihrem Grund/Boden (15) in einem Bereich von 0,2 mm bis 1,5 mm, bevorzugt von 0,4 mm bis 1,0 mm aufweist.

6. Fahrzeugluftreifen nach einem oder mehreren der Ansprüche 1 bis 5, **dadurch gekennzeichnet, dass** die trichterartige Erweiterung (12) zwei Flanken (16) aufweist, welche zum Grund (15) der trichterartigen Erweiterung (12) führen, wobei die Flanken (16) jeweils einen Winkel β in einem Bereich von 10° bis 50°, bevorzugt in einem Bereich von 15° bis 30°, besonders bevorzugt etwa 20° mit der radialen Richtung (rR) einschließen.

7. Fahrzeugluftreifen nach einem oder mehreren der Ansprüche 1 bis 6, **dadurch gekennzeichnet, dass** die trichterartige Erweiterung (12) einen etwa dreieckförmigen oder etwa halbkreisförmigen oder etwa trapezförmigen Querschnitt aufweist, wobei die größte Breite (13) der trichterartigen Erweiterung (12) an der Oberfläche des Blockes (7) und die geringste Breite an dem Grund/Boden (15) der trichterartigen Erweiterung (12) ist.

8. Fahrzeugluftreifen nach einem oder mehreren der Ansprüche 1 bis 7, **dadurch gekennzeichnet, dass** jeder der mit zu Schulterblockreihen (2, 5) gehörenden schulterseitigen Blöcken (7) 2 Mikrorillen aufweist, welche in ihrer Erstreckung einen Winkel α von 0° bis 15°, bevorzugt einen Winkel α von 0° bis 8° mit der Umfangsrichtung (uR) einschließen und dass an beiden Enden dieser Mikrorillen (11) je eine trichterartige Erweiterung (12) ausgebildet ist, welche jeweils in die diesen Block (7) begrenzenden Querrillen (6) mündet.

9. Fahrzeugluftreifen nach einem oder mehreren der Ansprüche 1 bis 8, **dadurch gekennzeichnet, dass** die an eine Schulterblockreihe (2) anschließende Blockreihe (3), bei welcher die Blöcke ebenfalls durch Querrillen (6), welche einen Winkel in einem Bereich von 0° bis 35° mit der axialen Richtung einschließen, voneinander getrennt sind, pro Block (7) jeweils ein oder zwei Mikrorillen (11) angeordnet sind, welche in ihrer Erstreckung einen Winkel α von 0° bis 15°, bevorzugt einen Winkel α von 0° bis 8° mit der Umfangsrichtung (uR) einschließen und dass an beiden Enden dieser Mikrorille(n) (11) je eine trichterartige Erweiterung (12) ausgebildet ist, welche jeweils in die diesen Block (7) begrenzenden Querrillen (6) mündet.

10. Fahrzeugluftreifen nach einem der Ansprüche 1 bis 9, **dadurch gekennzeichnet, dass** an der Einlauf- und Auslaufkante (8) zumindest eines Profilblockes (7) Schneekanten angeordnet sind, wobei eine Schneekante ein erhabener Steg ist, welcher 0,2 mm - 1,0 mm, bevorzugt 0,3 mm - 0,5 mm über die Oberfläche des Blockes hinaussteht und eine Breite von 0,1 mm - 1,0 mm, bevorzugt 0,3 mm - 0,5 mm aufweist.

## Claims

1. Pneumatic vehicle tyre having a tread with shoulder-side blocks (7), which belong to shoulder-block rows (2, 5), and with middle blocks (7) between the shoulder-side block rows (2, 5), wherein at least the blocks (7) of the shoulder-block rows (2, 5) are spaced apart from one another by transverse grooves (6) which include an angle in a range from 0° to 35° with the axial direction, and wherein the shoulder-side blocks (7) and the middle blocks (7) are in each case provided with, in plan view, at least two sipes (10) extending substantially parallel to one another and at an angle of up to 45° to the axial direction, which have a width of 0.4 mm to 0.8 mm and, at their lowest point, a depth of at least 50% of the profile depth, wherein the blocks (7) additionally have micro-grooves (11) which are arranged substantially parallel to the sipes (10) and/or transversely to the sipes (10), and wherein the micro-grooves (11) are provided with a width of 0.2 mm to 0.7 mm and with a depth of 0.2 mm to 0.7 mm, wherein, in at least one block (7) belonging to the shoulder-block row (2, 5), preferably in all the blocks (7) belonging to the shoulder-block row (2, 5), there is arranged at least one micro-groove (11) which extends in such a way as to include an angle α of 0° to 15°, preferably an angle α of 0° to 8°, with the circumferential direction (uR),
**characterized**
**in that**, at both ends of this micro-groove (11), in the region of the running-in and running-out edges (8), there is formed in each case one funnel-like widening (12) which in each case opens out into the transverse grooves (6) which delimit this block (7).

2. Pneumatic vehicle tyre according to Claim 1, **characterized in that**, in the at least one block (7) belonging to the shoulder-block row (2, 5), there are arranged 1 to 4, preferably 1 to 2, micro-grooves (11) which extend in such a way as to include an equal angle α of 0° to 15°, preferably an angle α of 0° to 8°, with the circumferential direction (uR), and **in that**, at both ends of these micro-grooves, in each case one funnel-like widening (12) is formed.

3. Pneumatic vehicle tyre according to Claim 1 or 2, **characterized in that**, outside the funnel-like widenings (12), the micro-grooves (11) are provided with a width of 0.5 mm and with a depth of 0.5 mm.

4. Pneumatic vehicle tyre according to one or more of Claims 1 to 3, **characterized in that** the depth of the funnel-like widening (12) increases in a ramped manner to the end of the micro-groove and, at the lowest point (17), which is situated at the outermost end of the micro-groove (11), is 1.0 mm to 3.0 mm, preferably is 1.5 mm.

5. Pneumatic vehicle tyre according to one or more of Claims 1 to 4, **characterized in that** the funnel-like widening (12) has a maximum width (13) in a range from 1.0 mm to 3.0 mm, preferably of 2.0 mm, wherein said maximum width (13) is formed at the surface of the profile block (7) at the outer end of the funnel-like widening (12), and **in that** the funnel-like widening (12) has a smaller width at its base/bottom (15), in a range from 0.2 mm to 1.5 mm, preferably from 0.4 mm to 1.0 mm.

6. Pneumatic vehicle tyre according to one or more of Claims 1 to 5, **characterized in that** the funnel-like widening (12) has two flanks (16) which lead to the base (15) of the funnel-like widening (12), wherein the flanks (16) in each case include an angle β in a range from 10° to 50°, preferably in a range from 15° to 30°, particularly preferably of approximately 20°, with the radial direction (rR).

7. Pneumatic vehicle tyre according to one or more of Claims 1 to 6, **characterized in that** the funnel-like widening (12) has an approximately triangular or approximately semicircular or approximately trapeziform cross section, wherein the greatest width (13) of the funnel-like widening (12) is at the surface of the block (7) and the smallest width is at the base/bottom (15) of the funnel-like widening (12).

8. Pneumatic vehicle tyre according to one or more of Claims 1 to 7, **characterized in that** each of the shoulder-side blocks (7) belonging to shoulder-block rows (2, 5) has 2 micro-grooves which extend in such a way as to include an angle α of 0° to 15°, preferably an angle α of 0° to 8°, with the circumferential direction (uR), and **in that**, at both ends of these micro-grooves (11), there is formed in each case one funnel-like widening (12) which in each case opens out into the transverse grooves (6) which delimit this block (7).

9. Pneumatic vehicle tyre according to one or more of Claims 1 to 8, **characterized in that** that block row (3) adjoining a shoulder-block row (2) in which the blocks are likewise separated from one another by transverse grooves (6), which include an angle in a range from 0° to 35° with the axial direction, has, per block (7), in each case one or two micro-grooves (11) which extend in such a way as to include an angle α of 0° to 15°, preferably an angle α of 0° to 8°, with the circumferential direction (uR), and **in that**, at both ends of this/these micro-groove(s) (11), there is formed in each case one funnel-like widening (12) which in each case opens out into the transverse grooves (6) which delimit this block (7).

10. Pneumatic vehicle tyre according to one of Claims 1 to 9, **characterized in that** snow edges are arranged on the running-in and running-out edges (8) of at least one profile block (7), wherein a snow edge is an elevated web which protrudes 0.2 mm - 1.0 mm, preferably 0.3 mm - 0.5 mm, beyond the surface of the block and has a width of 0.1 mm - 1.0 mm, preferably 0.3 mm - 0.5 mm.

## Revendications

1. Pneumatique de véhicule avec une bande de roulement avec des blocs côté épaulement (7) appartenant à des rangées de blocs d'épaulement (2, 5) et avec des blocs centraux (7) entre les rangées de blocs côté épaulement (2, 5), au moins les blocs (7) des rangées de blocs d'épaulement (2, 5) étant espacés les uns des autres par des rainures transversales (6) qui forment un angle dans une plage de 0° à 35° avec la direction axiale, et les blocs côté épaulement (7) et les blocs centraux (7) étant chacun pourvus, en vue de dessus, d'au moins deux entailles (10) essentiellement parallèles l'une à l'autre et s'étendant selon un angle de jusqu'à 45° par rapport à la direction axiale, qui présentent une largeur de 0,4 mm à 0,8 mm et, à leur point le plus profond, une profondeur d'au moins 50 % de la profondeur du profil, les blocs (7) présentant en outre des micro-rainures (11) qui sont agencées essentiellement parallèlement aux entailles (10) et/ou transversalement aux entailles (10), et les micro-rainures (11) étant pourvues d'une largeur de 0,2 mm à 0,7 mm et d'une profondeur de 0,2 mm à 0,7 mm, dans au moins un bloc (7) appartenant à la rangée de blocs d'épaulement (2, 5), de préférence dans tous les blocs (7) appartenant à la rangée de blocs d'épaulement (2, 5), étant agencée au moins une micro-rainure (11) qui forme dans son extension un angle α de 0° à 15°, de préférence un angle α de 0° à 8° avec la direction circonférentielle (uR),
**caractérisé en ce**
**qu'**aux deux extrémités de cette micro-rainure (11), dans la zone du bord d'entrée et du bord de sortie (8), est réalisé respectivement un élargissement en forme d'entonnoir (12), qui débouche respectivement dans les rainures transversales (6) délimitant ce bloc (7).

2. Pneumatique de véhicule selon la revendication 1, **caractérisé en ce que** dans l'au moins un bloc (7) appartenant à la rangée de blocs d'épaulement (2, 5) sont agencées 1 à 4, de préférence 1 à 2 micro-rainures (11), qui forment dans leur extension un même angle α de 0° à 15°, de préférence un angle α de 0° à 8° avec la direction circonférentielle (uR) et **en ce qu'**aux deux extrémités de ces micro-rainures est réalisé respectivement un élargissement en forme d'entonnoir (12).

3. Pneumatique de véhicule selon la revendication 1 ou 2, **caractérisé en ce que** les micro-rainures (11) à l'extérieur des élargissements en forme d'entonnoir (12) sont pourvues d'une largeur de 0,5 mm et d'une profondeur de 0,5 mm.

4. Pneumatique de véhicule selon une ou plusieurs des revendications 1 à 3, **caractérisé en ce que** l'élargissement en forme d'entonnoir (12) augmente en profondeur en forme de rampe vers l'extrémité de la micro-rainure et est de 1,0 mm à 3,0 mm, de préférence de 1,5 mm, au point le plus profond (17) qui se situe à l'extrémité la plus extérieure de la micro-rainure (11).

5. Pneumatique de véhicule selon une ou plusieurs des revendications 1 à 4, **caractérisé en ce que** l'élargissement en forme d'entonnoir (12) présente une largeur maximale (13) dans une plage de 1,0 mm à 3,0 mm, de préférence de 2,0 mm, cette largeur maximale (13) étant réalisée à la surface du bloc de profil (7) à l'extrémité extérieure de l'élargissement en forme d'entonnoir (12), et **en ce que** l'élargissement en forme d'entonnoir (12) présente une largeur inférieure à sa base/son fond (15) dans une plage de 0,2 mm à 1,5 mm, de préférence de 0,4 mm à 1,0 mm.

6. Pneumatique de véhicule selon une ou plusieurs des revendications 1 à 5, **caractérisé en ce que** l'élargissement en forme d'entonnoir (12) présente deux flancs (16) menant à la base (15) de l'élargissement en forme d'entonnoir (12), les flancs (16) formant chacun un angle β dans une plage de 10° à 50°, de préférence dans une plage de 15° à 30°, de manière particulièrement préférée d'environ 20° avec la direction radiale (rR).

7. Pneumatique de véhicule selon une ou plusieurs des revendications 1 à 6, **caractérisé en ce que** l'élargissement en forme d'entonnoir (12) présente une section transversale approximativement triangulaire ou approximativement semi-circulaire ou approximativement trapézoïdale, la plus grande largeur (13) de l'élargissement en forme d'entonnoir (12) étant à la surface du bloc (7) et la plus petite largeur étant à la base/au fond (15) de l'élargissement en forme d'entonnoir (12).

8. Pneumatique de véhicule selon une ou plusieurs des revendications 1 à 7, **caractérisé en ce que** chacun des blocs (7) côté épaulement appartenant à des rangées de blocs d'épaulement (2, 5) présente 2 micro-rainures qui forment dans leur extension un angle α de 0° à 15°, de préférence un angle α de 0° à 8° avec la direction circonférentielle (uR) et **en ce qu'**aux deux extrémités de ces micro-rainures (11) est réalisé un élargissement en forme d'entonnoir (12) qui débouche respectivement dans les rainures transversales (6) délimitant ce bloc (7).

9. Pneumatique de véhicule selon une ou plusieurs des revendications 1 à 8, **caractérisé en ce que** la rangée de blocs (3) faisant suite à une rangée de blocs d'épaulement (2), dans laquelle les blocs sont également séparés les uns des autres par des rainures transversales (6) qui forment un angle dans une plage de 0° à 35° avec la direction axiale, pour chaque bloc (7) sont agencées une ou deux micro-rainures (11) qui forment dans leur extension un angle α de 0° à 15°, de préférence un angle α de 0° à 8° avec la direction circonférentielle (uR) et **en ce qu'**aux deux extrémités de cette (ces) micro-rainure(s) (11) est réalisé respectivement un élargissement en forme d'entonnoir (12) qui débouche respectivement dans les rainures transversales (6) délimitant ce bloc (7).

10. Pneumatique de véhicule selon l'une quelconque des revendications 1 à 9, **caractérisé en ce que** des bords de neige sont agencés sur le bord d'entrée et le bord de sortie (8) d'au moins un bloc de profil (7), un bord de neige étant une nervure en relief qui dépasse de 0,2 mm à 1,0 mm, de préférence de 0,3 mm à 0,5 mm, de la surface du bloc et qui présente une largeur de 0,1 mm à 1,0 mm, de préférence de 0,3 mm à 0,5 mm.
